# EUROPÄISCHE PATENTANMELDUNG

(11) **EP 4 481 616 A1**
(43) Veröffentlichungstag der Anmeldung: **25.12.2024**
(21) Anmeldenummer: 23181132.4
(22) Anmeldetag: 23.06.2023
(51) Int. Cl.: G06F 30/27, B01D 3/14, F25J 3/04, G06F 119/22

(54) **VERFAHREN ZUM SIMULIEREN EINER DESTILLATIONSKOLONNE MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Bischoff, Martin, 85653 Aying, Großhelfendorf (DE); Tokic, Michel, 88069 Tettnang (DE); von Beuningen, Anja, 99085 Erfurt (DE); Becker, Christian, 91301 Forchheim (DE); Pfeiffer, Bernd-Markus, 91080 Uttenreuth (DE)
(74) Vertreter: Siemens Patent Attorneys

(57) **Zusammenfassung**

Verfahren zum Simulieren einer Destillationskolonne mittels einer elektronischen Recheneinrichtung, Computerprogrammprodukt, computerlesbares Speichermedium sowie elektronische Recheneinrichtung.

Die Erfindung betrifft ein Verfahren zum Simulieren einer Destillationskolonne (12) mittels einer elektronischen Recheneinrichtung (42), mit den Schritten:
- Vorgeben einer Anzahl von Destillationsböden (14a - 14d) innerhalb der Destillationskolonne (12) mittels der elektronischen Recheneinrichtung (42);
- Bestimmen von Abhängigkeiten der einzelnen Destillationsböden (14a - 14d) zueinander mittels der elektronischen Recheneinrichtung(42) ;
- Bereitstellen eines mathematischen Modells (44) für einen Destillationsboden (14a - 14d) mittels der elektronischen Recheneinrichtung (42);
- Bestimmen von zumindest einem jeweiligen Bodenparameter (46a - 46c) eines jeweiligen Destillationsbodens (14a - 14d) mittels der elektronischen Recheneinrichtung (42);
- Konkatenieren der jeweiligen Bodenparameter (46a - 46c) in Abhängigkeit von den bestimmten Abhängigkeiten der einzelnen Destillationsböden (14a - 14d) zu einem Gesamtmodell der Destillationskolonne (12) mittels der elektronischen Recheneinrichtung (42); und
- Simulieren der Destillationskolonne (42) in Abhängigkeit von dem Gesamtmodell mittels der elektronischen Recheneinrichtung (42).

Ferner betrifft die Erfindung ein Computerprogrammprodukt, ein computerlesbares Speichermedium sowie eine elektronische Recheneinrichtung (42).

## Beschreibung

Verfahren zum Simulieren einer Destillationskolonne mittels einer elektronischen Recheneinrichtung, Computerprogrammprodukt, computerlesbares Speichermedium sowie elektronische Recheneinrichtung.

Die Erfindung betrifft ein Verfahren zum Simulieren einer Destillationskolonne mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Bei einer Destillation wird ein Gemisch flüssiger Stoffe durch Verdampfung und anschließende Kondensation getrennt. Dafür wird ein Stoffgemisch ausgebildet aus zwei oder mehr Komponenten mit unterschiedlichen Siedepunkten, insbesondere einem sogenannten Tiefsieder und Hochsieder, in einer sogenannten Destillationskolonne auf definierte Temperaturen erhitzt, bis einer der beiden Stoffe verdampft. Der Dampf steigt auf, wird gekühlt und in einem Sammelbehälter als Flüssigkeit gesammelt. Um einen höheren Reinheitsgrad zu erreichen, können Teile des getrennten Stoffes wieder zurück in die Destillationskolonne geleitet werden, was auch als Rücklauf (englisch: reflux) bezeichnet wird. Am untersten Boden der Destillationskolonne, welcher als Sumpf bezeichnet wird, wird der Hochsieder abgeschöpft.

Um eine solche Destillation zu simulieren, wurden im Stand der Technik bisher lineare dynamische Modelle für vorher definierte Arbeitspunkte bezüglich Zulaufmenge und Konzentration aus Trainingsdaten identifiziert. Diese sind jedoch nur in begrenzter Umgebung um diese Arbeitspunkte gültig. Bei einer physikalischen/chemischen Simulation wird für jeden Boden ein komplexes Vapor-Liquid Equilibrium (VLE) berechnet. Hierbei wird der Anteil des Hoch- und Tiefsieders jeweils in der Gas- und Flüssigphase für jeden Boden bestimmt. Ferner wird für jeden Boden eine Strömungsrechnung durchgeführt, insbesondere, welcher Anteil des flüssigen Stoffes tropft auf den darunterliegenden Boden, und welcher Anteil gasförmiger Stoffe steigt zum darüberliegenden Boden auf. Es werden ferner die Massenbilanzen berechnet und eine Gesamtmasse pro Boden bestimmt sowie die Energiebilanzen berechnet. Das VLE basiert auf der Lösung hochdimensionaler, nichtlinearer Gleichungssysteme, die Massen- und Energiebilanzen sind Systeme von gewöhnlichen Differentialgleichungen, was insgesamt einen sehr hohen Rechenaufwand für jeden einzelnen Boden bedeutet.

Aufgabe der vorliegenden Erfindung ist es, ein Verfahren, ein Computerprogrammprodukt, ein computerlesbares Speichermedium sowie eine elektronische Recheneinrichtung zu schaffen, mittels welcher recheneffizient eine Simulation einer Destillationskolonne durchgeführt werden kann.

Diese Aufgabe wird durch ein Verfahren, ein Computerprogrammprodukt, ein computerlesbares Speichermedium sowie durch eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Simulieren einer Destillationskolonne mittels einer elektronischen Recheneinrichtung, mit den Schritten des Vorgebens einer Anzahl von Destillationsböden innerhalb der Destillationskolonne mittels der elektronischen Recheneinrichtung. Es werden Abhängigkeiten bei einzelnen Destillationsböden zueinander mittels der elektronischen Recheneinrichtung bestimmt. Es erfolgt das Bereitstellen eines mathematischen Modells für einen Destillationsboden mittels der elektronischen Recheneinrichtung. Es wird zumindest ein jeweiliger Bodenparameter eines jeweiligen Destillationsbodens mittels der elektronischen Recheneinrichtung bestimmt. Es folgt das Konkatenieren der jeweiligen Bodenparameter in Abhängigkeit von den bestimmten Abhängigkeiten der einzelnen Destillationsböden zu einem Gesamtmodell der Destillationskolonne mittels der elektronischen Recheneinrichtung und das Simulieren der Destillationskolonne in Abhängigkeit von dem Gesamtmodell mittels der elektronischen Recheneinrichtung.

Insbesondere ist somit vorgesehen, da die Destillationskolonne aus mehreren Destillationsböden besteht, auf denen stets die gleichen chemischen und physikalischen Prozesse ablaufen, dass ein entsprechendes mathematisches Modell für einen jeweiligen Boden/Destillationsboden bereitgestellt wird, und diese Bodenmodelle anschließend konkateniert werden.

Insbesondere, beispielsweise nachdem das Gesamtmodell für die Böden ausgewertet und eine entsprechende Strömungsrechnung ausgewertet wurde, können, sofern ein statisches Modell gewünscht ist, die berechneten Stoffmengen und Enthalpien erneut als Eingabe für die Kombination aller Bodenmodelle genutzt werden. Dabei sind die berechneten aufsteigenden Gas-Ströme und abfließenden Flüssigkeitsströmungen aus den vorhergehenden Schritten nun Zuläufe für den darüberliegenden bzw. darunterliegenden Boden. Dieser Vorgang kann iterativ wiederholt werden, bis alle physikalischen Prozesse ausgeglichen sind und ein stationärer Zustand erreicht worden ist. Es kann jedoch auch von Vorteil sein, diese Iteration nicht durchzuführen und ein dynamisches Modell zu erhalten, beispielsweise für Operator-Trainings einer solchen Destillationskolonne.

Insbesondere kann das mathematische Modell aus bereits in der Vergangenheit erfassten Daten von mindestens einer realen Destillationskolonne zusammengestellt werden. Insbesondere können im mathematischen Modell historische Daten für die chemischen und physikalischen Prozesse innerhalb einer realen Destillationskolonne bereitgestellt werden.

Dabei werden vorzugsweise Betriebsdaten der mindestens einen realen Destillationskolonne gemessen oder anderweitig erfasst. Die Betriebsdaten oder daraus abgeleitete Daten werden vorzugsweise im mathematischen Modell gespeichert. Die Simulation der simulierten Destillationskolonne kann dann abhängig von den gespeicherten Betriebsdaten oder den daraus abgeleiteten Daten erfolgen.

Insbesondere hat dies den Vorteil, dass die Auswertung der Simulation deutlich weniger Rechenleistung benötigt als die Berechnung im Stand der Technik. Dies erleichtert die Simulation der Anlage in Echtzeit. Es ist ferner keine rigorose Modellbildung der gesamten Anlage auf Basis von Expertenwissen zu Physik, Chemie und Thermodynamik erforderlich, sofern entsprechende Daten aus der realen Anlage gewonnen werden können. Diese Daten können insbesondere, sollte beispielsweise das mathematische Modell in Form einer künstlichen Intelligenz bereitgestellt werden, auch als Trainingsdaten bezeichnet werden. Die Beschränkung des Einsatzbereiches linearer Modelle auf die Umgebung eines festen Arbeitspunktes entfällt ferner.

Des Weiteren kann im Vergleich zu anderen Modellen basierend auf neuronalen Netzen die Lernaufgabe durch die hierarchische Architektur deutlich vereinfacht werden, indem die Struktur des Problems, insbesondere der Aufbau der Kolonne aus zahlreichen gleichartigen Böden, genutzt und die Systemdynamik für einen Boden nur einmal gelernt werden muss. Sofern ein rigoroses Modell vorhanden ist, ist keine teure Sensorik notwendig, um Messdaten zu erhalten, da diese aus dem rigorosen Simulationsmodell gewonnen werden.

Beispielsweise kann vorgesehen sein, dass als Stoffgemisch, das in der Destillationskolonne simuliert wird, Benzol, welches insbesondere ein Tief- bzw. Leichtsieder ist mit einem Siedepunkt von 80 °C, und Toluol, welches ein Hochsieder bzw. Schwersieder ist mit einem Siedepunkt von 100 °C, angesehen werden. Dieses Stoffgemisch ist rein beispielhaft und keinesfalls abschließend anzusehen. Die Simulation kann auch für weitere Stoffgemische eingesetzt werden.

Mit anderen Worten wird mittels Trainingsdaten das mathematische Modell angelernt und für die Simulation genutzt. Dabei können bei der Simulation entsprechende Werte für die simulierte Destillationskolonne bestimmt/abgeschätzt werden und beispielsweise auf einer Ausgabeeinrichtung ausgegeben werden. Es können ferner unterschiedliche Umgebungsparameter durch eine Eingabe angepasst beziehungsweise verändert werden und auf Basis dieser Eingabewerte, beispielsweise erfasst durch eine Eingabeeinrichtung, entsprechende Veränderungen in der Simulation bestimmt werden.

Gemäß einer vorteilhaften Ausgestaltungsform werden mittels der Simulation eine Kopfprodukt-Konzentration und/oder ein Kopfprodukt-Massenstrom und/oder eine Sumpfprodukt-Konzentration und/oder ein Sumpfprodukt-Massenstrom und/oder ein Temperaturprofil der einzelnen Destillationsböden und/oder ein Temperaturprofil der Destillationskolonne bestimmt. Insbesondere handelt es sich somit um die entsprechenden Systemgrößen, welche mittels der Simulation bestimmt bzw. berechnet werden können. Insbesondere kann das so entstandene Simulationsmodell beispielsweise für das Operator-Training, zur virtuellen Inbetriebnahme oder zur Erkennung von abnormalen Systemzuständen verwendet werden. Insbesondere können durch spezielle Optimierungsverfahren an einem Simulationsmodell auch optimierte Steuerungen für eine reale Destillationskolonne bestimmt werden, zum Beispiel durch Reinforcement Learning. Bei den entsprechenden Systemgrößen, welche simuliert werden, handelt es sich insbesondere um die entscheidenden Größen bei einem Destillationsprozess. Das Kopf-produkt kann dabei insbesondere auch als Destillat bezeichnet werden. Somit kann der entsprechende Destillationsprozess zuverlässig simuliert werden. Insbesondere können beispielsweise die Systemgrößen an einer entsprechenden Ausgabeeinrichtung der elektronischen Recheneinrichtung ausgegeben werden.

Ferner hat es sich als vorteilhaft erwiesen, wenn als Eingangsparameter für die Simulation ein Massenstromzulauf und/oder eine Zulauftemperatur und/oder eine Heizdampfmenge und/oder eine Zulaufkonzentration und/oder ein Rücklaufmassenstrom berücksichtigt werden. Insbesondere handelt es sich bei diesen Parametern um sogenannte Eingangsparameter, welche den Destillationsprozess beeinflussen. Diese Parameter können nun zuverlässig berücksichtigt werden und anhand der entsprechenden Eingangsparameter, welche beispielsweise über eine entsprechende Erfassungseinrichtung erfasst werden können, die Simulation zuverlässig durchgeführt werden.

Eine weitere vorteilhafte Ausgestaltungsform sieht vor, dass in einem jeweiligen mathematischen Modell der Destillationsböden eine abfließende Flüssigkeitsströmung berücksichtigt wird. Insbesondere können somit abfließende Flüssigkeitsströmungen, beispielsweise auf einen darunterliegenden Boden, entsprechend in dem mathematischen Modell berücksichtigt werden. Somit kann auf einfache Art und Weise die Simulation durchgeführt werden.

Ebenfalls vorteilhaft ist, wenn in einem jeweiligen mathematischen Modell der Destillationsböden eine aufsteigende Gas-Strömung berücksichtigt wird. Insbesondere kann die aufsteigende Gas-Strömung ebenfalls als Ablauf betrachtet werden, weil die aufsteigende Gas-Strömung beispielsweise in einen darüberliegenden Destillationsboden gelangt. Somit kann ein zuverlässiges mathematische Modell bereitgestellt werden.

Weiterhin vorteilhaft ist, wenn bei einem mathematischen Modell für einen Destillationsboden ohne externen Zulauf ein Zulaufwert auf null gesetzt wird. Insbesondere kann die Destillationskolonne zumindest einen Destillationsboden aufweisen, welcher einen externen Zulauf hat, in welchen insbesondere das Stoffgemisch eingebracht wird. Das mathematische Modell für Destillationsböden ist insbesondere ein allgemeines Modell, welches für alle Destillationsböden zutrifft. Bei einem Destillationsboden ohne externen Zulauf wird der Zulaufwert auf null gesetzt, wodurch ein Destillationsboden ohne Zulauf auf einfache Art und Weise simuliert werden kann. Somit ist es nicht notwendig, einzelne mathematische Modelle für unterschiedliche Destillationsböden bereitzustellen, sondern ein einzelnes allgemeines Destillationsbodenmodell reicht aus, um die entsprechenden Destillationsböden simulieren zu können.

Eine weitere vorteilhafte Ausgestaltungsform sieht vor, dass bei einem mathematischen Modell für einen Destillationsboden ohne externen Ablauf ein Ablaufwert auf null gesetzt wird. Insbesondere kann die Destillationskolonne zumindest einen Destillationsboden aufweisen, welcher einen externen Ablauf hat, aus welchen insbesondere der Hochsieder abgeschöpft wird (Sumpf) oder das Destillat entnommen wird. Das mathematische Modell für Destillationsböden ist insbesondere ein allgemeines Modell, welches für alle Destillationsböden zutrifft. Bei einem Destillationsboden ohne externen Ablauf wird der Ablaufwert auf null gesetzt, wodurch ein Destillationsboden ohne Ablauf auf einfache Art und Weise simuliert werden kann. Somit ist es nicht notwendig, einzelne mathematische Modelle für unterschiedliche Destillationsböden bereitzustellen, sondern ein einzelnes allgemeines Destillationsbodenmodell reicht aus, um die entsprechenden Destillationsböden simulieren zu können.

Weiterhin kann vorgesehen sein, dass das mathematische Modell als künstliche Intelligenz bereitgestellt wird. Insbesondere handelt es sich somit bei dem mathematischen Modell um ein sogenanntes KI-Modell. Die künstliche Intelligenz kann zum Beispiel als neuronales Netzwerk, beispielsweise in Form eines konvoluten neuronalen Netzwerks (CNN - Convolutional Neural Network) bzw. als ein rekurrentes neuronales Netzwerk (RNN - Recurrent Neural Network) ausgebildet sein. Dies sind rein beispielhafte Ausgestaltungsformen der künstlichen Intelligenz und können selbstverständlich um weitere Ausgestaltungen von künstlichen Intelligenzen erweitert werden. Insbesondere können somit die physikalischen Prozesse auf und zwischen den einzelnen Destillationsböden für alle Böden als gleichwertig angesehen werden, wodurch vorgeschlagen wird, ein einziges KI-Modell zu trainieren, welches jeweils einen Boden modelliert. Dieses erhält als Eingangsgröße die Stoff- und Energiemengen aller Zu- und Abläufe eines jeweiligen Bodens. Zuläufe sind hier vor allem die vom darunterliegenden Boden aufsteigenden Dämpfe sowie die vom darüberliegenden Boden herabtropfenden Flüssigkeiten. Zudem haben mindestens drei Böden einen externen Zulauf. Durch einen Zulauf im mittleren Bereich der Kolonne gelangt beispielsweise das Gemisch in den Destillationsturm, durch einen Zulauf im oberen Bereich der Rücklauf, und in den unteren Boden wird der Dampf vom Verdampfer eingespeist. Abläufe sind die zum darüberliegenden Boden strömenden Dämpfe sowie die zum darunterliegenden Boden herabtropfenden Flüssigkeiten. Beim obersten Boden wiederum sind die nach oben strömenden Dämpfe das gewonnene Destillat. Somit kann zuverlässig eine Simulation über die künstliche Intelligenz realisiert werden.

Ferner hat es sich als vorteilhaft erwiesen, wenn auf Basis des mathematischen Modells für einen jeweiligen Destillationsboden als Bodenparameter eine Enthalpie und/oder eine Dichte eines Phasengleichgewichts und/oder ein Druck des Phasengleichgewichts bestimmt werden. Insbesondere sind somit die Ausgabegrößen aus dem mathematischen Modell die Enthalpie des Bodens, die Dichte sowie der Druck des Phasengleichgewichts, beispielsweise von Flüssigkeit zu Dampf, auf dem jeweiligen Boden. Aus der Dichte sowie der Enthalpie kann die Temperatur für den jeweiligen Boden berechnet werden. Dichte und Druck dienen wiederum als Eingabegrößen für die Strömungsberechnung. Diese kann klassisch beispielsweise mittels der numerischen Lösung der sogenannten Navier-Stokes-Gleichungen geschehen oder aber alternativ ebenfalls durch ein Modell auf Basis einer künstlichen Intelligenz. Die Strömungsberechnung bestimmt dabei die Stoffmengen der zum darüberliegenden Boden verdampften Gase bzw. der zum darunterliegenden Boden tropfenden Flüssigkeiten. Aus den Stoffströmen aller Komponenten einer Mischung lassen sich anschließend die Massenströme anhand der Mol-Massen der Komponenten bestimmen.

Eine nochmals weitere vorteilhafte Ausgestaltungsform sieht vor, dass als Abhängigkeit der Destillationsböden zueinander eine Position der Destillationsböden in der Destillationskolonne bestimmt wird. Insbesondere bilden die einzelnen Destillationsböden einen sogenannten Stack aus den Destillationsböden. Beim obersten Destillationsboden wird insbesondere das Destillat entnommen, während der unterste Destillationsboden wiederum den Sumpf bildet. Anhand der entsprechenden Positionen zueinander kann insbesondere bestimmt werden, welche Abläufe und Zuläufe auf dem jeweiligen Destillationsboden zu verzeichnen sind. Somit kann in Abhängigkeit der Position zuverlässig die Simulation durchgeführt werden.

Ferner hat es sich als vorteilhaft erwiesen, wenn eine abfließende Flüssigkeitsströmung eines darüberliegenden Destillationsbodens als Zulauf für einen darunterliegenden Destillationsboden im mathematischen Modell berücksichtigt wird und/oder eine aufsteigende Gas-Strömung eines darunterliegenden Destillationsbodens als Zulauf für einen darüberliegenden Destillationsboden im mathematischen Modell berücksichtigt wird. Somit können entsprechende physikalische Eigenschaften in Abhängigkeit von der Position des jeweiligen Destillationsbodens berücksichtigt werden. Somit kann ein jeweiliger Destillationsboden zuverlässig modelliert werden, und insgesamt somit das Gesamtmodell für die Destillationskolonne zuverlässig bestimmt werden.

Ebenfalls vorteilhaft ist, wenn eine Simulation für einen kontinuierlichen Betrieb der Destillationskolonne durchgeführt wird. Insbesondere ist somit vorgesehen, dass die Destillationskolonne in einem kontinuierlichen Betrieb bereitgestellt wird. Die Simulation wird nun ebenfalls für einen kontinuierlichen Betrieb durchgeführt. Insbesondere ist unter kontinuierlicher Betrieb zu verstehen, dass kontinuierlich ein Stoffgemisch der Destillationskolonne zugeführt wird und insbesondere auch kontinuierlich zumindest das Destillat, welches insbesondere dem Kopfprodukt entspricht, entnommen wird. Dadurch kann hochflexibel die Simulation eingesetzt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft ein computerlesbares Speichermedium mit zumindest einem Computerprogrammprodukt nach dem vorhergehenden Aspekt.

Weiterhin betrifft die Erfindung auch eine elektronische Recheneinrichtung zum Simulieren einer Destillationskolonne, wobei die elektronische Recheneinrichtung zum Durchführen eines Verfahrens nach dem vorhergehenden Aspekt ausgebildet ist. Insbesondere wird das Verfahren mittels der Simulation durchgeführt.

Die elektronische Recheneinrichtung weist hier zusätzlich insbesondere eine Eingabeeinrichtung zum Erfassen von Eingangsparametern auf sowie eine Ausgabeeinrichtung zum Ausgeben von Systemgrößen.

Unter einer Recheneinheit/elektronischen Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebene Kategorie für eine Klassifizierungsaufgabe, einen oder mehrere prädizierte Werte oder eine prädizierte Sequenz beinhalten kann.

Für Anwendungsfälle oder Anwendungssituationen, die sich bei dem Verfahren ergeben können und die hier nicht explizit beschrieben sind, kann vorgesehen sein, dass abhängig von der Simulation eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Weiterhin kann eine reale Destillationskolonne abhängig von der Simulation gesteuert werden. Dabei können ein Massenstromzulauf, eine Zulauftemperatur, eine Heizdampfmenge, eine Zulaufkonzentration und/oder ein Rücklaufmassenstrom an der realen Destillationskolonne gemessen und als Eingangsparameter in die Simulation eingespeist werden. Die reale Destillationskolonne kann dann abhängig von aus den Eingangsparametern abgeleiteten Ergebnissen der Simulation gesteuert werden. Diese Simulationsergebnisse können insbesondere eine Kopfprodukt-Konzentration, einen Kopfprodukt-Massenstrom, eine Sumpfprodukt-Konzentration, einen Sumpfprodukt-Massenstrom, ein Temperaturprofil der einzelnen Destillationsböden (14a - 14d) und/oder ein Temperaturprofil (T1 - T4) der Destillationskolonne umfassen.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
FIG 1 zeigt ein schematisches Blockschaltbild gemäß einer Ausführungsform eines Destillationssystems mit einer Ausführungsform einer Destillationskolonne;
FIG 2 zeigt ein weiteres schematisches Blockschaltbild gemäß einer Ausführungsform einer Destillationskolonne;
FIG 3 zeigt ein schematisches Blockschaltbild gemäß einer Ausführungsform einer elektronischen Recheneinrichtung; und
FIG 4 zeigt ein weiteres schematisches Blockschaltbild gemäß einer Ausführungsform eines mathematischen Modells.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

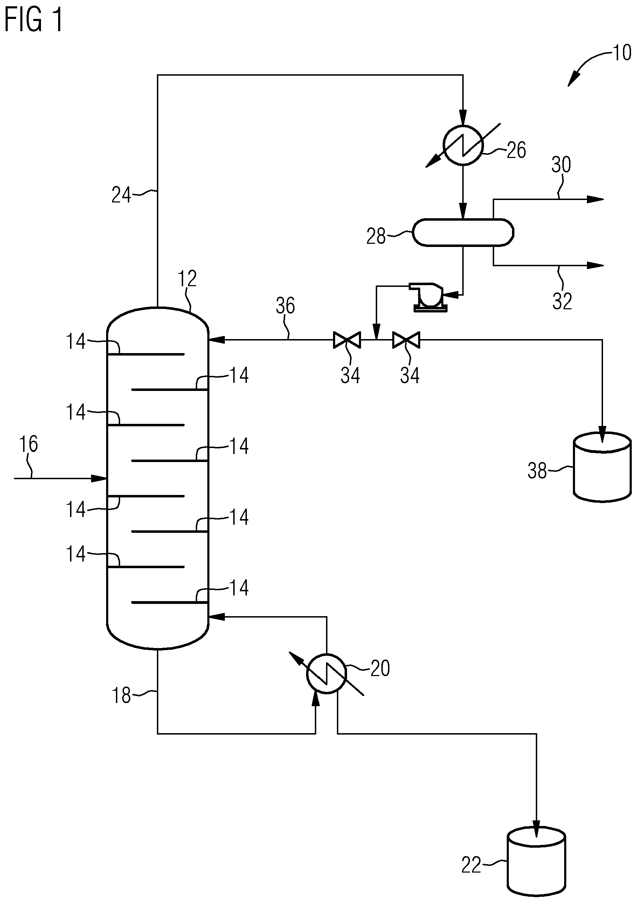

FIG 1 zeigt ein schematisches Blockschaltbild gemäß einer Ausführungsform eines realen Destillationssystems 10. Das Destillationssystem 10 weist zumindest eine Destillationskolonne 12 auf. Die Destillationskolonne 12 weist eine Vielzahl an Böden/Destillationsböden 14 auf. Beispielsweise können 80 Böden 14 in der Destillationskolonne 12 zu verzeichnen sein. Die Destillationskolonne 12 weist einen externen Zulauf 16 auf, durch welchen beispielsweise ein Stoffgemisch in die Destillationskolonne 12 eingebracht wird. Ferner weist die Destillationskolonne 12 einen externen Ablauf 18 auf, welcher insbesondere auch als Sumpf bezeichnet werden kann. Über den Ablauf 18 kann beispielsweise ein Verdampfer 20 geschaltet sein, um wiederum Dampf zurück in die Destillationskolonne 12 zu bringen. Ferner ist im Sumpf ein Sammelbehälter 22 für den Sumpf gezeigt.

Des Weiteren zeigt die FIG 1 einen weiteren Ablauf 24, über welchen insbesondere das Destillat gewonnen werden kann. Hierzu ist ferner ein Kühler 26 vorgesehen sowie ein Rückflussbehälter 28. Beim Rückflussbehälter 28 können insbesondere eine Abgasleitung 30 sowie ein Wasserlauslass 32 vorgesehen sein. Des Weiteren sind entsprechende Ventile 34 gezeigt. Vom Rückflussbehälter 28 kann wiederum ein Rückfluss 36 zurück in die Destillationskolonne 12 bereitgestellt sein, um beispielsweise die Qualität des Destillats zu erhöhen. Ferner kann ein Sammelbehälter 38 vorgesehen sein, welcher das Destillat sammelt.

Insbesondere zeigt die FIG 1, dass beispielsweise ein Stoffgemisch bestehend aus zwei oder mehreren Komponenten mit unterschiedlichen Siedepunkten, insbesondere ein sogenannter Tiefsieder und ein Hochsieder, in der Destillationskolonne 12 auf definierte Temperaturen erhitzt wird, bis einer der beiden Stoffe verdampft. Der Dampf steigt auf, wird gekühlt und in dem Sammelbehälter 38 als Flüssigkeit/Destillat gesammelt. Um einen höheren Reinheitsgrad zu erreichen, können Teile des genannten Stoffes wieder zurück in die Destillationskolonne 12 geleitet werden, was als Rücklauf 36 (englisch: reflux) bezeichnet wird. Am untersten Boden der Destillationskolonne 12 ist wiederum der Sumpf zu verzeichnen, wobei hier der Hochsieder abgeschöpft wird.

Als Stoffgemisch kann beispielsweise ein Gemisch aus Benzol sowie Toluol angesehen werden. Selbstverständlich sind auch weitere Stoffgemische in die Destillationskolonne 12 einbringbar.

Es ist nun vorgesehen, dass eine entsprechende Simulation des Destillationssystems 10, insbesondere der Destillationskolonne 12 durchgeführt wird. Hierbei können beispielsweise als physikalische Eingangsgrößen der Massenstromzulauf, die Zulauftemperatur, eine Heizdampfmenge, eine Zulaufkonzentration sowie ein Rücklaufmassenstrom angesehen werden. Als Systemgrößen, insbesondere als Ausgangsgrößen, welche zu simulieren sind, können insbesondere eine Kopfprodukt-Konzentration, ein Kopfprodukt-Massenstrom, eine Sumpfprodukt-Konzentration, ein Sumpfprodukt-Massenstrom sowie Temperaturen für das Temperaturprofil innerhalb der Destillationskolonne 12 von unten nach oben angesehen bzw. berechnet werden. Als Kopfprodukt kann insbesondere vorliegend auch das Destillat bezeichnet werden. Das so entstandene Simulationsmodell kann beispielsweise für das Operator-Training, zur virtuellen Inbetriebnahme oder zur Erkennung von abnormalen Systemzuständen verwendet werden. Insbesondere können durch spezielle Optimierungsverfahren am Simulationsmodell auch optimierte Steuerungen für die Anlage bestimmt werden, zum Beispiel durch Reinforcement Learning.

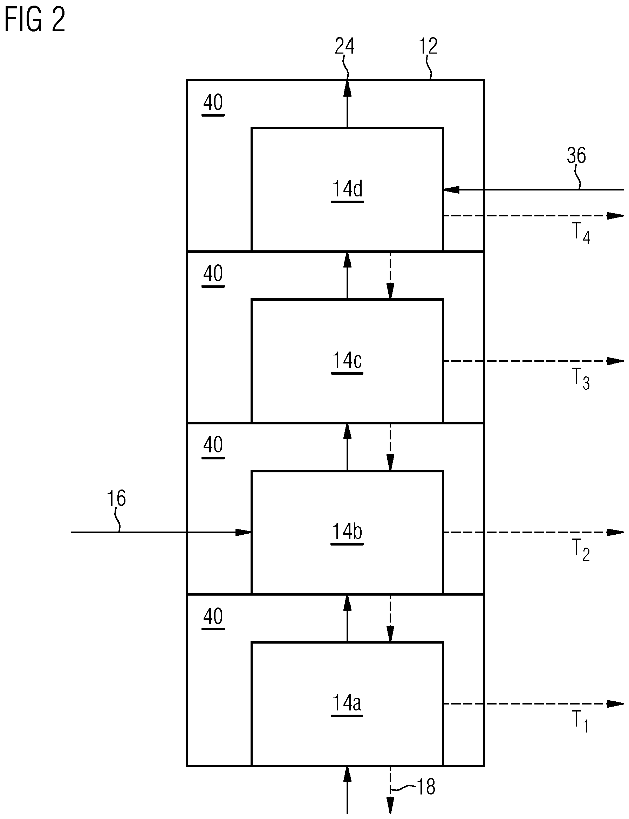

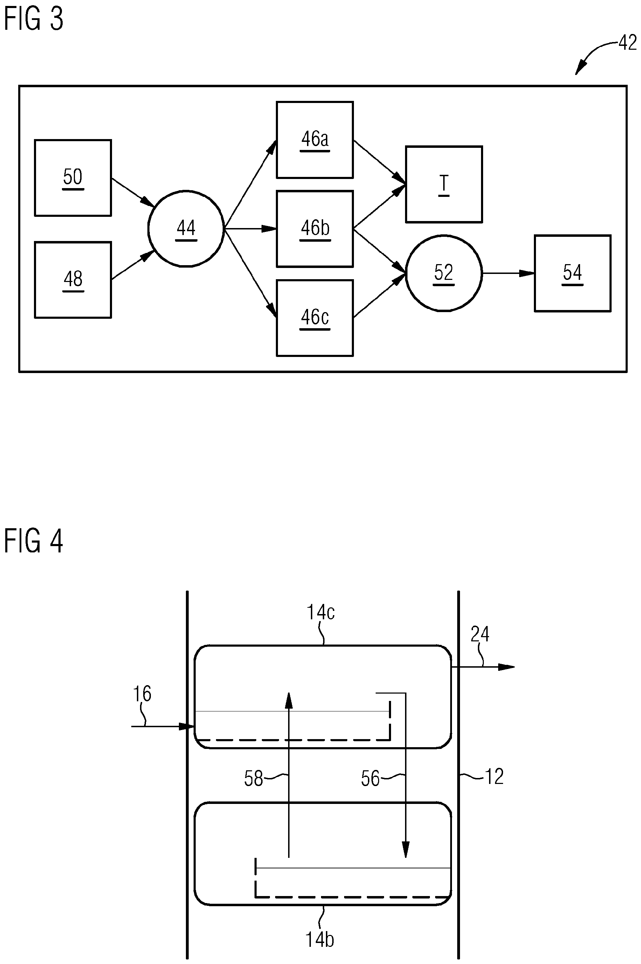

FIG 2 zeigt ein schematisches Blockschaltbild gemäß einer Ausführungsform einer Destillationskolonne 12. Insbesondere ist eine schematische Darstellung von einem jeweiligen Bodenmodell als KI-Modell 40 gezeigt, was im späteren Verlauf zu einem mathematischen Modell 44 (FIG. 3) zusammengeführt wird, für einzelne Destillationsböden 14 gezeigt. Dabei sind manche Destillationsböden 14 mit zusätzlichen Eingängen, wie beispielsweise Zulauf, Rücklauf und Dampf versehen. Des Weiteren sind manche mit entsprechenden Ausgängen versehen. Des Weiteren ist gezeigt, dass beispielsweise ein erster Destillationsboden 14a eine erste Temperatur T1 aufweist, ein zweiter Destillationsboden 14b eine zweite Temperatur T2 aufweist, ein dritter Destillationsboden 14c eine dritte Temperatur T3 aufweist und ein vierter Destillationsboden 14d eine vierte Temperatur T4 aufweist. Insbesondere zeigt somit die FIG 2 rein exemplarisch ein Modell eines Destillationsturms, insbesondere der Destillationskolonne 12, mit vier Destillationsböden 14a bis 14d.

Beim erfindungsgemäßen Verfahren zum Simulieren einer Destillationskolonne 12 ist vorgesehen, dass die Anzahl von Destillationsböden 14a bis 14d innerhalb der Destillationskolonne 12 mittels einer elektronischen Recheneinrichtung 42 (FIG 3) vorgegeben wird. Es erfolgt dann das Bestimmen der Abhängigkeiten der einzelnen Destillationsböden 14a bis 14d, insbesondere deren Position zueinander, mittels der elektronischen Recheneinrichtung 42. Es wird dann das mathematische Modell 44 für einen Destillationsboden 14a bis 14d mittels der elektronischen Recheneinrichtung 42 bereitgestellt. Es wird zumindest ein jeweiliger Bodenparameter 46a bis 46c (FIG 3) eines jeweiligen Destillationsbodens 14a bis 14d mittels der elektronischen Recheneinrichtung 42 bestimmt. Es erfolgt dann das Konkatenieren der jeweiligen Bodenparameter 46a bis 46c beziehungsweise der einzelnen Bodenmodell der Destillationsböden 14a bis 14d in Abhängigkeit von den bestimmten Abhängigkeiten der einzelnen Destillationsböden 14a bis 14d zu einem Gesamtmodell der Destillationskolonne 12 mittels der elektronischen Recheneinrichtung 42 und das Simulieren der Destillationskolonne 12 in Abhängigkeit von dem Gesamtmodell mittels der elektronischen Recheneinrichtung 42.

Insbesondere kann dabei vorgesehen sein, dass eine Simulation für einen kontinuierlichen Betrieb der Destillationskolonne 12 durchgeführt wird. Unter "kontinuierlicher Betrieb" ist insbesondere zu verstehen, dass ein kontinuierlicher Zulauf 16 sowie ein kontinuierlicher Ablauf 24 zu verzeichnen ist.

FIG 3 zeigt ein schematisches Blockschaltbild gemäß einer Ausführungsform der elektronischen Recheneinrichtung 42. Insbesondere ist das mathematische Modell 44 gezeigt, welches im vorliegenden Ausführungsbeispiel insbesondere als künstliches Intelligenz-Modell bereitgestellt ist. Wie bereits erwähnt, sind die physikalischen Prozesse auf und zwischen den Destillationsböden 14a bis 14d für alle Destillationsböden 14a bis 14d gleich, weshalb ein einziges KI-Modell 40, insbesondere das mathematische Modell 44, beispielsweise in Form eines neuronalen Netzwerks, kombiniert wird, welches jeweils einen Destillationsboden 14a bis 14d modelliert. Dieses erhält als Eingabegröße die Stoffmengen 48 sowie die Energiemengen 50 aller Zu- und Abläufe des jeweiligen Destillationsbodens 14a bis 14d. Zuläufe sind hier vor allem die vom beispielsweise darunterliegenden Destillationsboden 14a bis 14d aufsteigenden Dämpfe sowie die vom darüberliegenden Destillationsboden 14a bis 14d herabtropfenden Flüssigkeiten. Zudem haben mindestens drei Destillationsböden 14a bis 14d einen externen Zulauf 16. Insbesondere durch einen externen Zulauf 16 im mittleren Bereich der Destillationskolonne 12 gelangt das Stoffgemisch in den Destillationsturm bzw. Destillationskolonne 12. Durch einen Zulauf im oberen Bereich ist der Rücklauf 36 gebildet, und in den unteren Boden bzw. Destillationsboden 14a bis 14d wird dann vom Verdampfer 20 eingespeist. Abläufe sind die zum darüberliegenden Destillationsboden 14a bis 14d strömenden Dämpfe sowie die zum darunterliegenden Destillationsboden 14a bis 14d herabtropfenden Flüssigkeiten. Beim obersten Destillationsboden 14a bis 14d sind die nach oben strömenden Dämpfe das gewonnene Destillat.

Als Ausgangsgrößen berechnet das mathematische Modell 44 die Enthalpie 46a, die Dichte 46b des Phasengleichgewichts sowie den Druck 46c des Phasengleichgewichts. Aus der Dichte 46b und dem Druck 46c sowie der Enthalpie 46a kann dann die Temperatur T für den jeweiligen Destillationsboden 14a bis 14d bestimmt werden. Aus der Dichte 46b und dem Druck 46c kann wiederum eine Strömungsberechnung 52 durchgeführt werden. Diese kann klassisch mittels der numerischen Lösung der Navier-Stokes-Gleichung geschehen oder aber alternativ ebenfalls durch ein weiteres künstliches Intelligenz-Modell. Die Strömungsberechnung 52 bestimmt wiederum dabei die Stoffmenge 54 der zum darüberliegenden Destillationsboden 14a bis 14d verdampfenden Gase bzw. der zum darunterliegenden Destillationsboden 14a bis 14d tropfenden Flüssigkeiten. Aus den Stoffströmen aller Komponenten einer Mischung lassen sich anschließend die Massenströme anhand der Mol-Massen der Komponenten bestimmen.

FIG 4 zeigt ein weiteres schematisches Blockschaltbild gemäß einer Ausführungsform einer Destillationskolonne 12. Insbesondere sind zwei Destillationsböden 14b und 14c gezeigt. Im folgenden Ausführungsbeispiel weist der Destillationsboden 14c einen externen Zulauf 16 sowie einen externen Ablauf 24 auf. Der Destillationsboden 14c ist insbesondere als darüberliegender Destillationsboden 14c ausgebildet, und der Destillationsboden 14b ist insbesondere als darunterliegender Destillationsboden 14b ausgebildet. Der Destillationsboden 14b weist keinen externen Zulauf 16 sowie keinen externen Ablauf 24 auf. Insbesondere können jedoch für beide Destillationsböden 14b, 14c die gleichen mathematischen Modelle 44 bereitgestellt werden. Beim darunterliegenden Destillationsboden 14b kann jedoch beispielsweise vorgesehen sein, dass ein Zulaufwert für den externen Zulauf 16 auf null gesetzt wird. Ferner kann ein Ablaufwert für den externen Ablauf 24 ebenfalls auf null gesetzt werden.

FIG 4 zeigt ferner, dass im mathematischen Modell 44 eine abfließende Flüssigkeitsströmung 56 berücksichtigt wird. Ferner wird eine aufsteigende Gas-Strömung 58 ebenfalls mit berücksichtigt.

Insbesondere ist somit vorgesehen, dass das mathematische Modell 44 und die entsprechenden Strömungsberechnungen 52 für alle Destillationsböden 14a bis 14d bestimmt bzw. geschätzt bzw. durchgeführt werden. Nachdem das entsprechende mathematische Modell 44 für alle Destillationsböden 14a bis 14d ausgewertet und die Strömungsberechnungen 52 ausgewertet wurden, können, sofern ein statisches Gesamtmodell gewünscht ist, die berechneten Stoffmengen und Enthalpien erneut als Eingabe für die Kombination aller Bodenmodelle genutzt werden. Dabei sind die berechneten aufsteigenden Gas-Ströme und abfließenden Flüssigkeitsströmungen aus dem vorhergehenden Schritt nun Zuläufe für den darüberliegenden bzw. darunterliegenden Destillationsboden 14a bis 14d. Dieser Vorgang kann iterativ wiederholt werden, bis alle physikalischen Prozesse ausgeglichen sind und ein stationärer Zustand als Gesamtmodell erreicht worden ist. Es kann jedoch auch von Vorteil sein, diese Iteration nicht durchzuführen und ein dynamisches Modell zu erhalten, beispielsweise für Operator-Trainings.

Insbesondere liegt der Vorteil der Nutzung eines neuronalen Netzes als mathematisches Modell 44 jedoch in der schnellen Auswertung des Netzes im Vergleich zu iterativen Lösungen eines nichtlinearen Differentialgleichungssystems und algebraischen Gleichungen. Somit kann die Rechenzeit deutlich reduziert werden.

Wenn das mathematische Modell 44 einmal trainiert wurde, kann es abhängig vom Aufbau der Anlage mehrfach konkateniert werden, wobei die Anzahl der Bodenmodelle der Anzahl der Destillationsböden 14a bis 14d in der Anlage entspricht.

## Patentansprüche

1. Verfahren zum Simulieren einer Destillationskolonne (12) mittels einer elektronischen Recheneinrichtung (42), mit den Schritten:
- Vorgeben einer Anzahl von Destillationsböden (14a - 14d) innerhalb der Destillationskolonne (12) mittels der elektronischen Recheneinrichtung (42);
- Bestimmen von Abhängigkeiten der einzelnen Destillationsböden (14a - 14d) zueinander mittels der elektronischen Recheneinrichtung (42);
- Bereitstellen eines mathematischen Modells (44) für einen Destillationsboden (14a - 14d) mittels der elektronischen Recheneinrichtung (42);
- Bestimmen von zumindest einem jeweiligen Bodenparameter (46a - 46c) eines jeweiligen Destillationsbodens (14a - 14d) mittels der elektronischen Recheneinrichtung (42);
- Konkatenieren der jeweiligen Bodenparameter (46a - 46c) in Abhängigkeit von den bestimmten Abhängigkeiten der einzelnen Destillationsböden (14a - 14d) zu einem Gesamtmodell der Destillationskolonne (12) mittels der elektronischen Recheneinrichtung (42); und
- Simulieren der Destillationskolonne (42) in Abhängigkeit von dem Gesamtmodell mittels der elektronischen Recheneinrichtung (42).

2. Verfahren nach Anspruch 1, **dadurch gekennzeichnet, dass** mittels der Simulation eine Kopfprodukt-Konzentration und/oder ein Kopfprodukt-Massenstrom und/oder eine Sumpfprodukt-Konzentration und/oder ein Sumpfprodukt-Massenstrom und/oder ein Temperaturprofil der einzelnen Destillationsböden (14a - 14d) und/oder ein Temperaturprofil (T1 - T4) der Destillationskolonne (12) bestimmt wird.

3. Verfahren nach Anspruch 1 oder 2, **dadurch gekennzeichnet, dass**
als Eingangsparameter für die Simulation ein Massenstromzulauf und/oder eine Zulauftemperatur und/oder eine Heizdampfmenge und/oder eine Zulaufkonzentration und/oder ein Rücklaufmassenstrom berücksichtigt werden.

4. Verfahren nach einem der vorhergehenden Ansprüche, **dadurch gekennzeichnet, dass**
in einem jeweiligen mathematischen Modell (44) der Destillationsböden (14a - 14d) eine abfließende Flüssigkeitsströmung (56) berücksichtigt wird.

5. Verfahren nach einem der vorhergehenden Ansprüche, **dadurch gekennzeichnet, dass**
in einem jeweiligen mathematischen Modell (44) der Destillationsböden (14a - 14d) eine aufsteigende Gasströmung (58) berücksichtigt wird.

6. Verfahren nach einem der vorhergehenden Ansprüche, **dadurch gekennzeichnet, dass**
bei einem mathematischen Modell (44) für einen Destillationsboden (14a - 14d) ohne externen Zulauf (16) ein Zulaufwert auf null gesetzt wird.

7. Verfahren nach einem der vorhergehenden Ansprüche, **dadurch gekennzeichnet, dass**
bei einem mathematischen Modell (44) für einen Destillationsboden (14a - 14d) ohne externen Ablauf (18, 24) ein Ablaufwert auf null gesetzt wird.

8. Verfahren nach einem der vorhergehenden Ansprüche, **dadurch gekennzeichnet, dass**
das mathematische Modell (44) als künstliche Intelligenz bereitgestellt wird.

9. Verfahren nach einem der vorhergehenden Ansprüche, **dadurch gekennzeichnet, dass**
auf Basis des mathematischen Modells (44) für einen jeweiligen Destillationsboden (14a - 14d) als Bodenparameter (46a - 46c) eine Enthalpie (46a) und/oder eine Dichte (46b) eines Phasengleichgewichts und/oder ein Druck (46c) des Phasengleichgewichts bestimmt werden.

10. Verfahren nach einem der vorhergehenden Ansprüche, **dadurch gekennzeichnet, dass**
als Abhängigkeit der Destillationsböden (14a - 14d) zueinander eine Position der Destillationsböden (14a - 14d) in der Destillationskolonne (12) bestimmt wird.

11. Verfahren nach Anspruch 10, **dadurch gekennzeichnet, dass** eine abfließende Flüssigkeitsströmung (56) eines darüberliegenden Destillationsbodens (14a - 14d) als Zulauf für einen darunterliegenden Destillationsboden (14a - 14d) im mathematischen Modell (44) berücksichtigt wird und eine aufsteigende Gasströmung (58) eines darunterliegenden Destillationsbodens (14a - 14d) als Zulauf für einen darüberliegenden Destillationsboden (14a - 14d) im mathematischen Modell (44) berücksichtigt wird.

12. Verfahren nach einem der vorhergehenden Ansprüche, **dadurch gekennzeichnet, dass**
eine Simulation für einen kontinuierlichen Betrieb der Destillationskolonne (12) durchgeführt wird.

13. Computerprogrammproduckt mit Programmcodemitteln, welche eine elektronische Recheneinrichtung (42) dazu veranlassen, wenn die Programmcodemittel von der elektronischen Recheneinrichtung (42) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (42) zum Simulieren einer Destillationskolonne (12), wobei die elektronische Recheneinrichtung (42) zum Durchführen eines Verfahrens nach einem der Ansprüche 1 bis 12 ausgebildet ist.
